(19) Europäisches Patentamt / European Patent Office / Office européen des brevets

(11) **EP 3 253 983 B1**

(12) **FASCICULE DE BREVET EUROPEEN**

(45) Date de publication et mention de la délivrance du brevet:
**17.10.2018 Bulletin 2018/42**

(21) Numéro de dépôt: **16702117.9**

(22) Date de dépôt: **29.01.2016**

(51) Int Cl.:
*F16D 48/06* (2006.01)

(86) Numéro de dépôt international:
**PCT/EP2016/051966**

(87) Numéro de publication internationale:
**WO 2016/124504 (11.08.2016 Gazette 2016/32)**

(54) **ACTIONNEUR ELECTRIQUE POUR SYSTEME DE TRANSMISSION DE VEHICULE**

ELEKTRISCHER STELLANTRIEB FÜR EIN FAHRZEUGGETRIEBESYSTEM

ELECTRIC ACTUATOR FOR VEHICLE TRANSMISSION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2015 FR 1550935**

(43) Date de publication de la demande:
**13.12.2017 Bulletin 2017/50**

(73) Titulaire: **Valeo Embrayages**
**80009 Amiens Cedex 2 (FR)**

(72) Inventeurs:
• **MAHI, Zakaria**
**80009 Amiens (FR)**

• **MAUREL, Pascal**
**80009 Amiens (FR)**

(74) Mandataire: **Cardon, Nicolas et al**
**Valeo Embrayages**
**Sce Propriété Intellectuelle**
**Le Delta**
**14, avenue des Béguines**
**95892 Cergy Pontoise Cedex (FR)**

(56) Documents cités:
WO-A1-2014/044521      DE-A1-102007 008 982
DE-A1-102009 008 597   DE-C1- 10 137 581
FR-A1- 2 947 768       US-A1- 2011 168 516

**Description**

La présente invention concerne un actionneur électrique pour système de transmission de véhicule. Voir FR2947768 comme l'état de la technique plus proche.

L'invention s'applique notamment, mais non exclusivement, à l'actionnement d'un embrayage simple ou double dont l'état au repos peut être normalement embrayé ou normalement débrayé, à l'actionnement d'un synchroniseur de boîte de vitesses pour transmission manuelle, à l'actionnement d'une boîte de vitesses robotisée, à l'actionnement d'une boîte de vitesses manuelle à double embrayage, ou encore à l'actionnement d'un embrayage de couplage d'un moteur thermique avec une machine électrique lorsque ces deux derniers font partie d'une chaîne de propulsion d'un véhicule hybride.

Un tel système de transmission est supposé avoir plusieurs configurations : une configuration dans laquelle il permet la transmission d'un mouvement, c'est-à-dire qu'il est dans l'état embrayé, et une configuration dans laquelle cette transmission ne s'effectue pas, c'est-à-dire qu'il est dans l'état débrayé. L'actionneur électrique permet alors, via un moteur électrique, le maintien du système de transmission dans l'une au moins de ces configurations et le passage de l'une à l'autre de ces configurations.

Le maintien par l'actionneur du système de transmission dans une configuration nécessite l'exercice par ce dernier d'un couple de maintien sur le système de transmission, et l'exercice de ce couple est lié à l'alimentation électrique du moteur de l'actionneur par un courant de maintien. Pour réduire la taille de la source d'énergie électrique dédiée à l'alimentation électrique du moteur, il importe que ce courant de maintien soit peu élevé. En outre, ce courant de maintien étant susceptible de générer par effet Joule un échauffement dans le moteur, la réduction de ce courant permet de réduire les risques d'usure prématurée de l'actionneur, voire de destruction par incendie de ce dernier. Ce courant de maintien I pouvant être lié par une constante K au couple électromagnétique T exercé sur le moteur électrique selon la relation T=K*I, cela impose de dimensionner le moteur de sorte que la constante K ait une valeur élevée.

Le passage du système de transmission de l'une à l'autre des configurations ci-dessus doit être effectué rapidement afin de répondre de façon satisfaisante à une consigne. Pour obtenir une telle rapidité, le moteur doit permettre d'obtenir des vitesses élevées, ce qui nécessite une constante K de valeur peu élevée.

L'obtention d'un actionneur électrique permettant de réduire le courant de maintien tout en répondant de façon satisfaisante aux consignes dynamiques suppose ainsi le respect d'exigences contradictoires.

Dans ce but, il est connu d'associer un moteur électrique de petite taille avec un réducteur de rapport variable mécaniquement pour adapter la vitesse et le courant du moteur électrique en fonction des consignes, et avec un système de rattrapage d'usure du système de transmission. Il est par ailleurs connu d'associer un moteur électrique de petite taille avec un réducteur de rapport fixe, avec un système élastique fournissant ponctuellement au moteur l'effort nécessaire, et avec un système de rattrapage d'usure du système de transmission.

De telles solutions sont complexes à réaliser et nécessitent l'ajout de pièces spécifiques dont un système de rattrapage d'usure du système de transmission, étant en conséquence coûteuses et encombrantes.

L'invention vise à permettre de bénéficier d'un actionneur électrique pour système de transmission qui permette de concilier les exigences mentionnées précédemment tout en remédiant aux inconvénients des solutions connues.

L'invention y parvient, selon l'un de ses aspects, à l'aide d'un actionneur pour système de transmission de véhicule, comprenant :

- une machine électrique comprenant un induit et un inducteur, la machine étant telle que la relation entre une grandeur représentative du couple électromagnétique T exercé sur la machine et une grandeur représentative du courant I circulant dans le circuit électrique de l'induit fasse intervenir une constante K, K étant la constante de couple de la machine électrique,
- un convertisseur statique comprenant une pluralité de cellules de commutation, le convertisseur statique étant disposé de manière à relier électriquement le circuit électrique de l'induit à une source d'énergie électrique, et
- un système de commande des cellules de commutation du convertisseur statique,

ledit système étant configuré pour appliquer un premier mode de commande aux cellules de commutation, de manière à ce que la constante de couple K de la machine électrique prenne une première valeur, et pour appliquer un deuxième mode de commande aux cellules de commutation, de manière à ce que la constante de couple de la machine électrique varie de façon continue au sein d'une deuxième plage de valeurs.

Au sens de la présente demande, la variation de la constante de couple de la machine électrique est continue lorsqu'elle décrit une trajectoire entre la première valeur et celle de la valeur de la deuxième plage de valeurs qui est la plus éloignée de la première valeur. Cette variation continue correspond à un défluxage continu de la machine électrique. La constante de couple peut alors varier de façon monotone depuis la première valeur lorsque le deuxième mode de commande est appliqué.

Selon l'aspect ci-dessus de l'invention, une valeur de constante de couple est associée au premier mode de commande tandis qu'une pluralité de valeurs de constante de couple sont associées au deuxième mode de commande.

La première valeur de la constante de couple peut former une borne, par exemple la borne supérieure, de la deuxième plage de valeurs.

La relation ci-dessus peut être une relation linéaire ou affine entre le couple électromagnétique T exercé sur la machine et le courant I circulant dans le circuit électrique de l'induit. La relation s'exprime alors :

$$T = K \times I + T_0$$

où $T_0$ est nul, le cas échéant.

En variante, la relation ci-dessus peut être une relation linéaire ou affine entre le couple électromagnétique T exercé sur la machine et un courant I', image par une ou plusieurs transformées mathématiques, par exemple de Clarke et de Park, du courant I circulant dans le circuit électrique de l'induit, par exemple dans le cas où la machine électrique est une machine synchrone à pôles lisses, comme on le verra par la suite.

La relation s'exprime alors :

$$T = K \times I' + T_0'$$

où $T_0'$ est nul, le cas échéant.

En variante, la machine électrique peut être une machine synchrone à pôles saillants, la relation s'exprimant alors :

$$T = K_m \times I + K_{reluc} \times I^2 + T_0''$$

En variante encore, la relation ci-dessus peut être une relation carrée entre le couple électromagnétique T exercé sur la machine et le courant I circulant dans le circuit électrique de l'induit, par exemple dans le cas où la machine électrique est une machine synchro-reluctante, comme on le verra par la suite.

La relation s'exprime alors :

$$T = K \times I^2 + T_0''$$

où $T_0''$ est nul, le cas échéant.

Chaque mode de commande appliqué par le système de commande peut correspondre à un mode de fonctionnement différent de l'actionneur. Le passage de l'un à l'autre de ces modes de fonctionnement de l'actionneur s'obtient alors en modifiant la commande des cellules de commutation. Autrement dit, contrairement aux solutions selon l'art antérieur, la possibilité pour l'actionneur d'avoir au moins deux modes de fonctionnement différents ne nécessite pas le recours à une architecture matérielle complexe et l'utilisation sélective de certains des éléments de cette architecture selon le mode de fonctionnement souhaité pour l'actionneur. Une seule et même architecture matérielle dont on modifie lorsque nécessaire la commande permet selon l'invention de bénéficier d'un actionneur à au moins deux modes de fonctionnement distincts.

Le système de commande fait par exemple varier la constante de couple dans la deuxième plage de valeurs en fonction de l'un au moins des paramètres suivants:

- vitesse de la machine électrique,
- amplitude du courant d'alimentation du stator de la machine électrique
- amplitude de la tension d'alimentation de la machine électrique
- résistance électrique de chaque phase du stator de la machine électrique,- inductance de chaque phase de la machine électrique, - force contre-électromotrice de la machine électrique, et/ou
- résistance(s) électrique(s) en amont et/ou en aval du convertisseur statique.

Le système de commande peut appliquer le premier mode de commande lorsque l'actionneur est dans un mode de fonctionnement statique et il peut appliquer le deuxième mode de commande lorsque l'actionneur est dans un mode de fonctionnement dynamique. Le deuxième mode de commande peut alors permettre d'augmenter la puissance mécanique fournie par la machine électrique.

La première valeur de la constante de couple K de la machine électrique peut être élevée, de manière à permettre de réduire la valeur du courant alimentant la machine électrique, sans pour autant affecter la valeur du couple exercé par l'actionneur sur le système de transmission. Cette valeur élevée convient par exemple pour maintenir en état le système de transmission ou pour déplacer lentement l'actionneur.

L'actionneur peut comprendre un réducteur, et ce dernier peut présenter un rapport de réduction fixe, choisi en fonction de l'effort maximal imposé par le système de transmission sur l'actionneur, de manière à réduire le couple électromagnétique devant être appliqué au rotor de la machine électrique lorsque l'actionneur maintient le système de transmission dans un état donné.

Ce rapport fixe de réduction permet avantageusement de réaliser le compromis entre :

- la réduction la plus important possible de la valeur du couple électromagnétique correspondant à l'effort maximal imposé par le système de transmission et mentionné ci-dessus, et
- une course ou un nombre de révolutions minimal permettant de parcourir la course d'actionnement de l'actionneur de sa position de repos vers une position où il maintient le système de transmission dans l'état donné en un temps qui soit le plus faible possible.

Cette valeur fixe pour le rapport de réduction permet par exemple de réduire de 25 % à 50% la valeur du couple électromagnétique permettant ledit maintien par rapport à la valeur de couple électromagnétique à fournir par l'actionneur avec un réducteur permettant de réaliser le déplacement de l'actionneur de sa position de repos jusqu'à la position de maintien dans un temps imparti qui est par exemple compris entre 80 et 150 ms pour un embrayage, et entre 30 et 60 ms pour un actionneur pour synchroniseur.

Avec un tel réducteur, on peut encore diminuer la valeur du courant nécessaire lorsque l'actionneur est dans le mode de fonctionnement statique. En effet, la valeur de couple que doit exercer l'actionneur étant réduite, pour une même valeur élevée de la constante de couple K, la valeur du courant alimentant la machine électrique est encore réduite. Ainsi, la valeur du courant prélevé sur une source d'énergie électrique est abaissée de manière significative. La valeur élevée de la constante de couple K, associée à la valeur du rapport de réduction du réducteur, peut permettre de ne prélever pour l'alimentation de la machine électrique qu'un courant de 1 A à 2 A à la source d'énergie électrique, qui est par exemple la batterie du réseau de bord du véhicule.

La deuxième plage de valeurs pour la constante de couple K de la machine électrique peut être formée par des valeurs faibles. Cette ou ces valeurs faibles peuvent correspondre à un mode de fonctionnement étant un déplacement rapide de l'actionneur, par exemple pour suivre une variation de consigne. Dans ce mode de fonctionnement de l'actionneur, le courant électrique alimentant la machine électrique est plus important. Ce mode de fonctionnement peut correspondre à un fonctionnement transitoire de l'actionneur.

Lorsque la valeur fixe du rapport de réduction est choisie comme mentionné ci-dessus, la réduction de 25% à 50% de la valeur du couple de maintien que cette valeur fixe de rapport de réduction entraîne provoque une démultiplication de la course à parcourir au niveau du moteur pour déplacer l'actionneur de sa position de repos à la position dans laquelle il maintient le système de transmission dans l'état donné. Pour ne pas allonger le temps nécessaire au déplacement selon cette course de l'actionneur, il faudrait une machine électrique capable de tourner deux à quatre fois plus rapidement. La commande des cellules de commutation de manière à ce que la constante de couple prenne les valeurs faibles, en permettant de faire tourner le moteur deux à quatre fois plus vite qu'avec la valeur élevée, peut permettre de régler ce problème.

Le système de commande peut être configuré pour limiter le courant alimentant la machine électrique lors du démarrage de cette dernière, de manière à éviter un échauffement excessif dans la machine électrique ou la démagnétisation d'aimants permanents pouvant être utilisés dans la machine électrique.

Cette limitation du courant peut être ajustée en fonction de l'état thermique de la machine électrique et de la caractéristique de magnétisation des aimants permanents, cet état thermique pouvant être déterminé à partie d'une mesure de température et/ou à partir d'un modèle de température comme décrit dans le document FR 2 951 033.

Le convertisseur statique peut comprendre plusieurs, notamment trois, bras montés en parallèle, chaque bras comprenant deux cellules de commutation en série séparées entre elles par un point milieu, chaque point milieu permettant la connexion électrique du convertisseur au circuit électrique de l'induit de la machine électrique.

La machine électrique est par exemple une machine synchrone et le convertisseur statique peut former un onduleur polyphasé, notamment triphasé.

La machine synchrone peut être une machine à rotor à aimants permanents ou une machine à rotor bobiné. La machine synchrone peut être une machine à pôles saillants ou à pôles lisses.

Il peut encore s'agit d'une machine à courant continu sans balai (désignée par « BLDC » en anglais). De telles machines sont plus robustes et peuvent présenter des performances supérieures à celles des machines à courant continu.

Dans une telle machine, la constante de couple K dépend de l'angle interne de la machine, lequel est l'angle défini entre le flux rotorique dans la machine et le flux généré par le champ tournant statorique.

Le système de commande des cellules de commutation peut mettre en oeuvre une commande vectorielle pour commander les cellules de commutation de l'onduleur, ladite commande permettant que l'angle interne de la machine prenne une première valeur lorsque le premier mode de commande est appliqué aux cellules de commutation, et la commande vectorielle permettant que l'angle interne de la machine varie de façon continue dans une deuxième plage de valeurs lorsque le deuxième mode de commande est appliqué aux cellules de commutation.

Dans une machine synchrone, en utilisant les transformées de Clarke et de Park, l'équation liant le couple électromagnétique exercé sur le rotor de la machine électrique et la norme du vecteur courant dans le repère de Park est :

$$T = \frac{3}{2} \times P \times \Phi \times sin\psi \times I' + \frac{3}{4}\left(L_d - L_q\right)I'^2 \sin(2\psi) \ (1)$$

P étant le nombre de paires de pôles du stator de la machine synchrone,
Φ étant le flux magnétique dans l'entrefer de la machine,
Ψ étant l'angle interne de la machine,
$L_d$ et $L_q$ étant les inductances de la machine électrique sur l'axe direct et sur l'axe en quadrature dans le repère de Park, et

I' étant tel que $I' = \sqrt{I_d^2 + I_q^2}$ où $I_d$ et $I_q$ sont les composants sur l'axe direct et sur l'axe en quadrature dans le repère de Park du courant circulant dans le circuit électrique du stator, I' étant alors la norme du vecteur représentant dans le repère de Park le courant circulant dans le circuit électrique du stator, I' étant encore désigné plus simplement par « norme du vecteur courant » par la suite.

Ainsi, en commandant le système de commande des cellules de commutation de manière à faire varier la valeur de l'angle interne $\psi$ de la machine synchrone, c'est-à-dire en défluxant cette machine synchrone, on fait varier la valeur de la constante de couple K.

Dans le cas d'une machine synchrone à pôles lisses, la relation (1) ci-dessus devient

$$T = \frac{3}{2} \times P \times \Phi \times sin\psi \times I'$$

et la constante de couple K est égale à $\frac{3}{2} \times P \times \Phi \times sin\psi$.

Dans ce cas, lorsque le premier mode de commande est appliqué, l'angle interne $\psi$ de la machine électrique peut être égal à 90°.

Toujours avec une machine synchrone à pôles lisses, lorsque le deuxième mode de commande est appliqué, l'angle interne $\psi$ de la machine électrique peut varier de façon continue entre 90° et 180°.

Dans le cas d'une machine synchrone à pôles saillants et dans le cas d'une machine synchro-reluctante, la valeur de l'angle interne $\psi$ correspondant à la première valeur de la constante de couple et la valeur de cet angle interne correspondant à la valeur de la deuxième plage de valeurs de la constante de couple qui est la plus éloignée de la première valeur sont notamment les racines de la dérivée par rapport à l'angle interne $\psi$ de l'équation (1).

Dans le cas d'une machine synchrone à pôles saillants, ces valeurs de l'angle interne $\psi$ sont différentes de 90°.

Dans le cas d'une machine synchro-reluctante, la valeur de l'angle interne $\psi$ correspondant à la première valeur est par exemple égale à 45° tandis que la valeur de l'angle interne $\psi$ correspondant à la valeur de la deuxième plage de valeurs qui est la plus éloignée de la première valeur est différente de 90°.

Dans tout ce qui précède, lorsque le premier mode de commande est appliqué, la composante sur l'axe direct dans le repère de Park du courant circulant dans le circuit électrique du stator peut être asservie à 0A tandis que la composante sur l'axe en quadrature peut être asservie à une consigne déterminée en fonction de l'effort appliqué par le système de transmission sur l'actionneur.

Dans tout ce qui précède, lorsque le deuxième mode de commande est appliqué, la valeur de consigne de la composante sur l'axe en quadrature dans le repère de Park du courant circulant dans le circuit électrique du stator peut encore être déterminée en fonction de l'effort appliqué par le système de transmission sur l'actionneur, et la valeur de consigne de la composante sur l'axe direct peut être déterminée de manière à ce que la norme du vecteur courant reste inférieure à une valeur maximale.

La valeur de consigne de la composante sur l'axe direct peut être déterminée de manière exacte ou forfaitaire. Cette valeur de consigne peut n'être déterminée que lorsque la vitesse de la machine électrique est supérieure à la vitesse de bascule de cette machine électrique.

La manière exacte peut reposer sur l'emploi d'une fonction mathématique liant la consigne de la composante directe du courant dans le repère de Park aux paramètres suivants : nombre de paires de pôles de la machine électrique, flux rotorique, résistance électrique de chaque phase du stator de la machine électrique, inductance de chaque phase de la machine électrique, vitesse de la machine électrique, consigne pour la composante sur l'axe en quadrature dans le repère de Park de ce courant, amplitude du courant d'alimentation du stator de la machine électrique, et amplitude de la tension d'alimentation de la machine électrique. Cette consigne de courant peut être mise à jour de façon dynamique, par exemple de manière à limiter les pertes thermiques de la machine électrique.

La manière forfaitaire peut consister à générer la consigne de courant pour la composante sur l'axe direct de manière à ce que la norme du vecteur courant I' reste inférieure à une valeur maximale. Dans le cas d'une machine synchrone à pôles lisses, cette consigne de courant est nulle, contrairement au cas d'une machine synchrone à pôles saillants ou d'une machine synchro-reluctante.

Lorsque la machine électrique et l'onduleur sont triphasés, l'actionneur peut comprendre un organe de mesure du courant circulant une des phases du stator de la machine synchrone, et un organe de mesure du courant circulant dans une autre des phases dudit stator. Le système triphasé étant équilibré, la connaissance du courant dans deux des phases permet de déterminer l'ensemble des courants statoriques. On peut ainsi réaliser une commande vectorielle en boucle fermée.

La machine synchrone, lorsqu'elle est triphasée, peut être associée à trois capteurs à effet Hall disposés à 120°.

Le système de commande peut mettre en oeuvre une régulation en cascade selon laquelle, pour réguler la position de l'actionneur à une valeur de consigne, on régule tout ou partie des composantes dans un repère issu d'une ou plusieurs transformées mathématiques, par exemple dans le repère de Park, du courant circulant dans l'induit de la machine électrique, notamment le courant circulant dans le circuit électrique du stator de la machine électrique, à leurs valeurs de consigne respectives.

Cette régulation en cascade peut avoir comme entrée la valeur de consigne pour la position de l'actionneur et cette entrée peut être comparée à la position mesurée de l'actionneur. Le résultat de cette comparaison peut être reçu en entrée d'un bloc de contrôle de position dont la sortie fournit la valeur de consigne de la composante sur l'axe en quadrature dans le repère de Park du courant circulant dans le circuit électrique du stator de la machine électrique. Cette valeur de consigne peut ainsi être une image du couple fourni par la machine électrique. Cette valeur de consigne peut être comparée avec la valeur mesurée pour cette composante sur l'axe en quadrature. Le résultat de cette comparaison peut être reçu en entrée d'un bloc de contrôle de courant recevant également comme autre entrée le résultat de la comparaison entre la valeur de consigne pour la composante sur l'axe direct dans le repère de Park du courant circulant dans le stator de la machine électrique et la valeur mesurée pour cette composante. La sortie de ce bloc de contrôle de courant peut ensuite correspondre à la consigne à appliquer au module de pilotage, encore appelé « driver », des cellules de commutation du convertisseur statique.

La valeur de consigne pour la composante sur l'axe direct dans le repère de Park de ce courant peut être obtenue à l'aide de la méthode exacte ou de la méthode forfaitaire, telles que mentionnées ci-dessus.

Un observateur fournissant la valeur mesurée pour la position de l'actionneur et la valeur mesurée pour la vitesse de la machine électrique peut être utilisé pour cette régulation en cascade.

Selon cette régulation, on peut ainsi réguler d'abord la position de l'actionneur, puis simultanément toutes les composantes dans le repère de Park du courant circulant dans le circuit électrique du stator de la machine électrique.

Toujours selon cette régulation, la consigne pour la composante sur l'axe en quadrature dans le repère de Park du courant est déterminée en fonction seulement de l'écart entre la valeur de consigne et la valeur mesurée pour la position de l'actionneur.

Cette régulation peut être appelée « régulation cascade position/courant ».

En variante, le système de commande peut mettre en oeuvre une régulation en cascade selon laquelle, pour réguler la position de l'actionneur à une valeur de consigne, on régule successivement la vitesse de la machine électrique à une valeur de consigne, puis on régule tout ou partie des composantes dans un repère issu d'une ou plusieurs transformées mathématiques, par exemple dans le repère de Park, du courant circulant dans l'induit de la machine électrique, à leurs valeurs de consigne respectives.

Cette régulation en cascade peut avoir comme entrée la valeur de consigne pour la position de l'actionneur et cette entrée peut être comparée à la position mesurée de l'actionneur. Le résultat de cette comparaison peut être reçu en entrée d'un bloc de contrôle de position dont la sortie fournit la valeur de consigne pour la vitesse de la machine électrique. Cette valeur de consigne peut être comparée avec la valeur mesurée pour la vitesse de la machine électrique. Le résultat de cette comparaison peut être reçu en entrée d'un bloc de contrôle de vitesse dont la sortie fournit la valeur de consigne de la composante sur l'axe en quadrature dans le repère de Park du courant circulant dans le circuit électrique du stator de la machine électrique. Cette valeur de consigne peut être comparée avec la valeur mesurée pour cette composante sur l'axe en quadrature. Le résultat de cette comparaison peut être reçu en entrée d'un bloc de contrôle de courant recevant également comme autre entrée le résultat de la comparaison entre la valeur de consigne pour la composante sur l'axe direct dans le repère de Park du courant circulant dans le stator de la machine électrique et la valeur mesurée pour cette composante. La sortie de ce bloc de contrôle de courant peut ensuite correspondre à la consigne à appliquer au module de pilotage, encore appelé « driver », des cellules de commutation du convertisseur statique.

La valeur de consigne pour la composante sur l'axe direct dans le repère de Park de ce courant peut être obtenue à l'aide de la méthode exacte ou de la méthode forfaitaire, telles que mentionnées ci-dessus.

Un observateur fournissant la valeur mesurée pour la position de l'actionneur et la valeur mesurée pour la vitesse de la machine électrique peut être utilisé pour cette régulation en cascade.

Selon cette régulation, on peut ainsi réguler d'abord la position de l'actionneur, puis simultanément toutes les composantes dans le repère de Park du courant circulant dans le circuit électrique du stator de la machine électrique.

Toujours selon cette régulation, la consigne pour la composante sur l'axe en quadrature dans le repère de Park du courant est déterminée en fonction de l'écart entre la valeur de consigne et la valeur mesurée pour la position de l'actionneur et en fonction de l'écart entre la valeur de consigne et la valeur mesurée pour la vitesse de la machine électrique.

Cette régulation peut être appelée « régulation cascade position/vitesse/courant ».

L'une ou l'autre des régulations mentionnées ci-dessus peut permettre la variation continue de l'angle interne de la machine électrique. Cette variation continue peut notamment être mise en oeuvre en fonction d'un critère de gestion de l'énergie électrique de la machine électrique.

Le système de commande peut être configuré de manière à appliquer un mode de commande auxiliaire lorsqu'il reçoit une information relative à l'existence d'une défaillance. Ce mode de commande auxiliaire peut agir sur les cellules de commutation du convertisseur statique de manière à ce que la cellule de commutation de chaque bras reliant le point milieu et l'entrée continue positive du convertisseur statique soit non passante, et à ce que la cellule de commutation de chaque bras reliant le point milieu et l'entrée continue négative du convertisseur statique soit passante. La machine électrique est alors déconnectée de la source d'énergie électrique, étant au contraire bouclée sur elle-même. On accroît ainsi la sûreté de l'actionneur puisque le moteur de ce dernier est freiné s'il est entraîné par la charge, comme cela se produit dans le cas où le système de transmission est un embrayage simple avec un état au repos accouplé, et qui est dans l'état désaccouplé lorsque la défaillance se produit. Un décollage brutal non souhaité du véhicule est ainsi évité et/ou minimisé.

Dans le cas par exemple où la défaillance concerne une des cellules de commutation reliant le point milieu d'un bras à l'entrée continue positive du convertisseur statique, cette cellule de commutation étant bloquée en mode passant, la commande auxiliaire peut alors :

- commander les autres cellules de commutation reliant les autres points milieux à l'entrée continue positive du convertisseur de manière à ce qu'elles soient passantes, et
- commander les cellules de commutation reliant les points milieux à l'entrée continue négative du convertisseur statique de manière à ce qu'elles soient non passantes, afin de réaliser la fonction de freinage.

Lorsque la défaillance concerne une cellule de commutation reliant un point milieu à l'entrée continue négative du convertisseur statique et que cette cellule est bloquée en mode passant, une commande symétrique de celle qui vient d'être décrite peut être appliquée.

Lorsque la défaillance concerne une des cellules de commutation et que cette dernière est bloquée à l'état non passant, le mode de commande auxiliaire peut consister à commander les cellules de commutation reliées à l'entrée continue du convertisseur statique à laquelle la cellule de commutation victime de la défaillance n'est pas reliée.

En variante, et notamment dans le cas où le système de transmission est un double embrayage dont l'état au repos est l'état désaccouplé, le mode de commande auxiliaire peut consister à rendre non passant l'ensemble des cellules de commutation du convertisseur statique, afin d'accélérer le passage du système de transmission dans l'état désaccouplé.

Dans tout ce qui précède, la défaillance peut se rapporter à l'actionneur, au système de transmission, plus globalement à la chaîne de propulsion du véhicule, voire même plus globalement au véhicule.

Dans tout ce qui précède, lorsque la machine électrique est tournante, l'actionneur peut comprendre un organe de mesure de la position angulaire du rotor de la machine électrique tournante.

L'invention n'est pas limitée aux exemples de machines électriques mentionnés ci-dessus. Elle s'applique également à des actionneurs pour systèmes de transmission fonctionnant à l'aide d'une machine asynchrone, d'une machine à reluctance variable ou synchro-reluctante, ou d'une machine synchrone auto-pilotée.

L'invention a encore pour objet, selon un autre de ses aspects, un actionneur pour système de transmission de véhicule, comprenant :

- une machine électrique,

- un convertisseur statique comprenant une pluralité de cellules de commutation, le convertisseur statique étant disposé de manière à relier électriquement le circuit électrique de l'induit à une source d'énergie électrique, et
- un système de commande des cellules de commutation du convertisseur statique, ledit système étant configuré de manière à permettre un défluxage de la machine électrique pour que la constante de couple de ladite machine électrique puisse prendre une première valeur et une pluralité de valeurs appartenant à une deuxième plage de valeurs.

Tout ou partie des caractéristiques mentionnées ci-dessus s'applique à cet autre aspect de l'invention

L'invention a encore pour objet, selon un autre de ses aspects, un ensemble, comprenant :

- un actionneur tel que défini ci-dessus, et
- un système de transmission de véhicule, ledit système comprenant un organe apte à être déplacé par l'actionneur.

L'actionneur peut comprendre un élément d'actionnement configuré pour déplacer ledit organe du système de transmission

L'organe apte à être déplacé par l'actionneur peut être un diaphragme d'embrayage ou un cylindre émetteur, par exemple.

Le système de transmission peut être l'un embrayage à sec, d'un double embrayage à sec et d'un synchroniseur de boîte de vitesses.

L'invention a encore pour objet, selon un autre de ses aspects, un procédé de commande d'un actionneur tel que défini ci-dessus, procédé dans lequel la commande des cellules de commutation du convertisseur statique permet que la valeur de la constante de couple prenne au moins une valeur élevée et une pluralité de valeurs faibles.

Le procédé comprend l'étape consistant à faire varier de façon continue la constante de couple parmi les valeurs faibles, cette variation s'effectuant notamment depuis la valeur élevée.

Le procédé peut comprendre l'étape selon laquelle on commande les cellules de commutation de manière à ce que la constante de couple prenne la valeur élevée lorsque l'actionneur maintient le système de transmission dans un état donné.

Cet état donné peut être l'état accouplé ou dans l'état désaccouplé du système de transmission. Le maintien du système de transmission dans cet état par l'actionneur se traduit pour l'actionneur par le fait que la consigne de position de ce dernier n'évolue plus et par le fait que son déplacement est terminé.

Lorsque le système de transmission est un embrayage simple ou double dont l'état au repos est l'état accouplé, les cellules de commutation peuvent être commandées de manière à ce que la constante de couple prenne la valeur élevée pour que l'actionneur maintienne le système de transmission dans l'état désaccouplé.

Lorsque le système de transmission est un embrayage simple ou double dont l'état au repos est l'état désaccouplé, les cellules de commutation peuvent être commandées de manière à ce que la constante de couple prenne la valeur élevée pour que l'actionneur maintienne le système de transmission dans l'état accouplé.

Le procédé peut comprendre l'étape selon laquelle on commande les cellules de commutation de manière à ce que la constante de couple prenne les valeurs faibles pour déplacer l'actionneur. Cette étape peut être effectuée à la réception d'une consigne de déplacement et peut permettre de modifier l'état du système de transmission. La constante de couple peut alors varier, de façon continue, lorsqu'elle prend des valeurs faibles.

Comme mentionné précédemment, le système de commande peut être configuré de manière à ce que la constante de couple puisse prendre une seule valeur élevée et une pluralité de valeurs faibles. Le système de transmission peut être un embrayage, et les cellules de commutation peuvent être commandées de manière à ce que la constante de couple prenne une valeur faible pour amener le système de transmission dans l'état désaccouplé et les cellules de commutation peuvent être commandées de manière à ce que la constante de couple prenne une autre valeur faible pour amener le système de transmission dans l'état accouplé.

Dans le cas où le système de transmission est un embrayage simple dont l'état au repos est l'état accouplé, la valeur faible plus grande de la constante de couple peut être utilisée pour amener l'embrayage dans l'état accouplé, tandis que la valeur faible plus petite de la constante de couple peut être utilisée pour amener l'embrayage dans l'état désaccouplé.

Dans le cas où le système de transmission est un embrayage double, la valeur faible plus grande de la constante de couple peut être utilisée pour amener l'embrayage dans l'état désaccouplé, tandis que la valeur faible plus petite de la constante de couple peut être utilisée pour amener l'embrayage dans l'état accouplé.

Selon le procédé ci-dessus, le système de commande peut être configuré de manière à appliquer un mode de commande auxiliaire aux cellules de commutation lorsque ce système de commande reçoit une information relative à l'existence d'une défaillance.

Le système de transmission est par exemple un embrayage simple ou double, dont l'état au repos est l'état accouplé, le mode de commande auxiliaire peut agir sur les cellules de commutation du convertisseur statique de manière à ce que :

- la cellule de commutation de chaque bras reliant le point milieu et l'entrée continue positive, respectivement négative, du convertisseur statique soit non passante, et
- la cellule de commutation de chaque bras reliant le point milieu et l'entrée continue négative, respectivement positive, du convertisseur statique soit passante, de manière à freiner la machine électrique lorsqu'elle est entraînée par la charge du système de transmission.

En variante, le système de transmission est un embrayage simple ou double, dont l'état au repos est l'état désaccouplé, et la commande auxiliaire agit sur les cellules de commutation du convertisseur statique de manière à rendre non passant l'ensemble desdites cellules de commutation du convertisseur statique, afin de ne pas freiner la machine électrique lorsqu'elle est entraînée par la charge du système de transmission.

Dans tout ce qui précède, la deuxième plage de valeurs peut comprendre au moins deux valeurs distinctes, de sorte que la constante de couple prend :

- une première valeur lorsque le système de commande applique le premier mode de commande, et
- varie en prenant au moins deux, notamment au moins trois, valeurs distinctes lorsque le système de commande applique le deuxième mode de commande.

L'invention pourra être mieux comprise à la lecture d'exemples non limitatifs de mise en oeuvre de celle-ci et à l'examen du dessin annexé sur lequel :

- la figure 1 est une représentation cinématique d'un ensemble comprenant un actionneur selon un exemple de mise en oeuvre de l'invention et le système de transmission avec lequel il interagit,

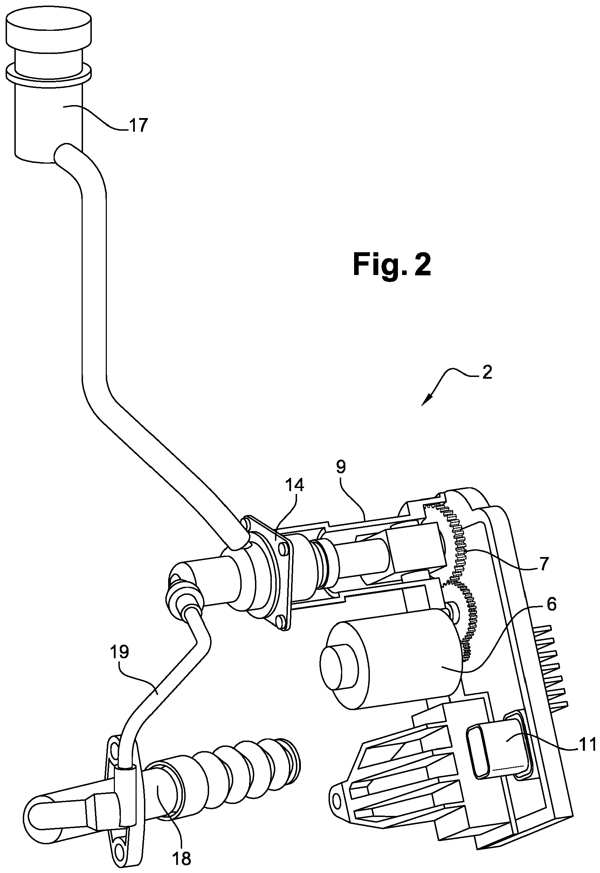

- la figure 2 est une vue en élévation de l'ensemble de la figure 1,
- la figure 3 représente un exemple de carte électronique utilisée pour la réalisation d'un actionneur selon un exemple de mise en oeuvre de l'invention,
- la figure 4 représente un système de commande, un convertisseur statique et une machine synchrone d'un actionneur selon un exemple de mise en oeuvre de l'invention,
- les figures 5 et 8 sont des graphes représentant l'évolution du couple exercé sur la machine électrique et du courant circulant dans le stator de celle-ci en fonction de la vitesse de celle-ci selon que la constante de couple prend une première valeur ou varie au sein d'une deuxième plage de valeurs,
- les figures 6 et 7 représentent deux variantes de mise en oeuvre du système de commande de la figure 4,
- la figure 9 permet de visualiser simultanément la position de l'actionneur et l'alimentation électrique de la machine électrique de cet actionneur, et
- la figure 10 est un graphe représentant différentes grandeurs illustrant l'effet de l'invention.

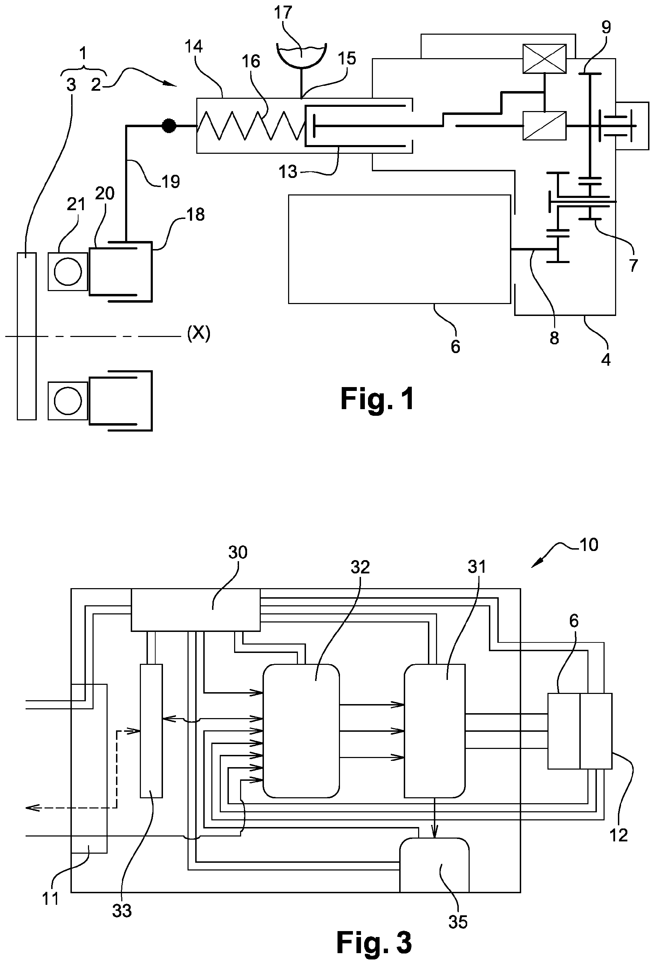

On a représenté sur la figure 1 un ensemble 1 comprenant un actionneur 2 interagissant avec un système de transmission 3. Dans l'exemple de la figure 1, le système de transmission 3 est un embrayage simple.

L'actionneur 2 comprend dans cet exemple un boîtier 4 coopérant avec le carter d'une machine électrique 6. Le boîtier peut être fixé sur le groupe moto-propulseur ou sur le châssis d'un véhicule.

Le boîtier 4 peut recevoir un réducteur 7 entraîné en rotation par l'arbre de sortie 8 de la machine électrique 6, et un système 9 de transformation de mouvement roto-linéaire. Le réducteur 7 présente ici un rapport de transmission fixe. Le réducteur 7 peut comprendre un ou deux étages de réduction. La valeur du rapport de transmission du réducteur est dans l'exemple considéré déterminée en fonction de l'effort maximal imposé par le système de transmission 3 sur l'actionneur 2, de manière à réduire le couple électromagnétique devant être appliqué au rotor de la machine électrique 6 lorsqu'elle maintient le système de transmission 3 dans un état donné.

Le boîtier 4 contient aussi dans l'exemple considéré une carte électronique 10 permettant de commander le fonctionnement de la machine électrique 6 de manière à ce que l'actionneur 2 puisse présenter au moins deux modes de fonctionnements distincts. Comme on le verra par la suite, cette commande consiste à modifier la constante de couple de la machine électrique 6 de manière à ce que celle-ci puisse prendre une première valeur et une pluralité de valeurs appartenant à une deuxième plage de valeurs.

Un connecteur 11 est également porté par le boîtier 4, et il permet la connexion électrique de la carte électronique 10 à une source d'énergie électrique qui est par exemple la batterie du réseau de bord du véhicule. Le connecteur 11 peut également permettre de connecter la carte électronique 10 au bus CAN (Controller Area Network) du véhicule. On permet ainsi la commande de la machine électrique 6 à partir de l'unité de contrôle moteur (ECU) du véhicule, cette dernière mettant notamment en oeuvre un logiciel de supervision du système de transmission 3.

Le boîtier peut aussi recevoir un capteur 12 de position d'un élément mobile de l'actionneur 2, par exemple un capteur de position du rotor de la machine électrique 6. Ce capteur 12 peut ou non être porté par la carte électronique 10. La partie de traitement de ce capteur est par exemple portée par la carte 10 tandis que la partie de mesure de ce capteur 12 est disposée au niveau du rotor de la machine électrique 6.

Le système 9 de transformation de mouvement roto-linéaire est par exemple une vis à billes, une vis écrou ou une vis à roulements planétaires. Le système 9 peut ainsi être tel que décrit dans la demande déposée par la Demanderesse le 2 octobre 2013 en France sous le numéro 13 59544 dont le contenu est incorporé à la présente demande par référence.. Le système 9 permet, à partir du mouvement rotatif transmis par le réducteur 7, de déplacer en translation un piston 13 d'un cylindre émetteur 14 permettant de modifier l'état de l'embrayage 3.

Le déplacement de ce piston 13 sur une première course, dite course morte, met à découvert un orifice 15 qui relie la chambre 16 du cylindre émetteur 14 à un réservoir hydraulique basse pression 17. Le déplacement du piston 13 sur une deuxième course, dite course active, permet de recouvrir cet orifice, de sorte que le fluide contenu dans la chambre 16 du cylindre émetteur 14 peut être déplacé par le piston 13 vers un cylindre récepteur 18, via une canalisation hydraulique 19. Le cylindre récepteur 18 de l'exemple considéré comprend un piston annulaire 20 coaxial à l'axe de rotation X de l'embrayage 3. Ce piston annulaire 20 est dans l'exemple considéré relié à un roulement à billes 21 qui vient déplacer en translation selon l'axe X le diaphragme de l'embrayage 3, par exemple via une fourchette.

La figure 3 représente de façon fonctionnelle la carte électronique 10. Comme représenté sur cette figure, la carte électronique 10 intègre des moyens de commande de la machine électrique 6 et, dans l'exemple considéré, elle coopère avec le capteur 12 qui est externe à la carte 10.

La carte 10 est reliée au connecteur 11 qui, comme déjà mentionné, permet l'acheminement à la carte à la fois de signaux de puissance et de signaux de commande.

La carte 10 comprend dans l'exemple considéré un module 30 de gestion des alimentations électriques de la carte 10. Ce module 30 est électriquement alimenté via le connecteur 11 par une source d'énergie électrique du véhicule, par exemple la batterie du réseau de bord. Le module 30 est, comme représenté, configuré pour générer des signaux de puissance permettant d'alimenter électriquement les différents composants de la carte 10, ainsi que le capteur de position 12 du rotor de la machine électrique 6.

La carte 10 peut encore comprendre, comme représenté sur la figure 3, un convertisseur statique 31, un système de commande 32 du convertisseur statique 31, un module de gestion 33 de la communication sur le bus CAN, et un capteur 35 du courant dans la machine électrique 6. Le module 30 peut générer des signaux de puissance de valeur différente pour ces différents composants 31 à 35.

Comme on le verra par la suite, le convertisseur statique 31 peut comprendre trois bras 40 montés en parallèle, chaque bras 40 étant monté entre une entrée continue positive 47 et une entrée continue négative 48 du convertisseur statique 31. Chaque bras 40 comprend deux cellules de commutation 41 en série séparées entre elles par un point milieu 42, chaque point milieu 42 permettant la connexion électrique du convertisseur 31 au circuit électrique de l'induit de la machine électrique 6 via une branche 44. Chaque cellule de commutation peut former un interrupteur bidirectionnel en courant, étant par exemple formée par un transistor à effet de champ.

Le convertisseur statique 31 est configuré pour alimenter électriquement l'induit de la machine électrique à partir de la puissance électrique fournie par le module 30 de gestion des alimentations électriques de la carte 10.

Le système de commande 32 du convertisseur statique 31 comprend par exemple un ou plusieurs microcontrôleurs. Ce ou ces microcontrôleurs sont configurés pour communiquer avec d'autres éléments de la carte électronique 10. Ils sont par exemple configurés pour recevoir et traiter des données en provenance du capteur de position 12 du rotor de la machine électrique 6. Ces données sont par exemple transmises sous forme analogique ou sous forme de valeurs de rapport cyclique. Le traitement de ces données par le système de commande 32 peut permettre de réaliser une commande en boucle fermée de l'actionneur 2 par exemple en courant et/ou en position et/ou en effort.

Le système de commande 32 peut en outre recevoir et traiter des données du capteur 35 du courant dans la machine électrique 6, ainsi que d'autres capteurs éventuels portés par la carte 10, notamment des capteurs effectuant des mesures de température, de tension d'alimentation. Le système de commande 32 peut encore recevoir et traiter des données provenant de capteurs externes à la carte et dont les mesures sont acheminées au système de commande 32 via le connecteur 11 et le module de gestion 33.

Le système de commande 32 peut également recevoir et traiter, via le connecteur 11 et le module de gestion 33, d'autres informations relatives à la commande de l'actionneur 2, par exemple issues de l'ECU, qui sont alors décodées par ce système de commande 32.

Dans le cas où l'actionneur 2 interagit avec un embrayage, les mesures ainsi acheminées via le connecteur 11 peuvent comprendre des mesures de vitesse d'entrée d'une boîte de vitesse du véhicule.

Dans le cas où l'actionneur 2 est un actionneur de passage ou de sélection de vitesses, les mesures acheminées via le connecteur 11 peuvent comprendre des mesures de température d'huile de régime secondaire ou des mesures de position d'un levier de passage des vitesses.

Le système de commande 32 peut également envoyer des données via le module de gestion 33 et le connecteur 11 vers l'extérieur de la carte électronique 10.

Afin de réaliser les différentes communications ci-dessus, le système de commande 32 du convertisseur statique 31 peut présenter des entrées analogiques, des entrées logiques, des sorties analogiques ainsi que des sorties gérant des signaux logiques ou des valeurs de rapport cyclique pour commander les cellules de commutation 41 du convertisseur statique 31.

Le module de gestion 33 comprend des éléments électroniques configurés pour gérer la communication sur un bus réseau multiplexé et pour transmettre des informations véhiculées par la liaison au système de commande 32.

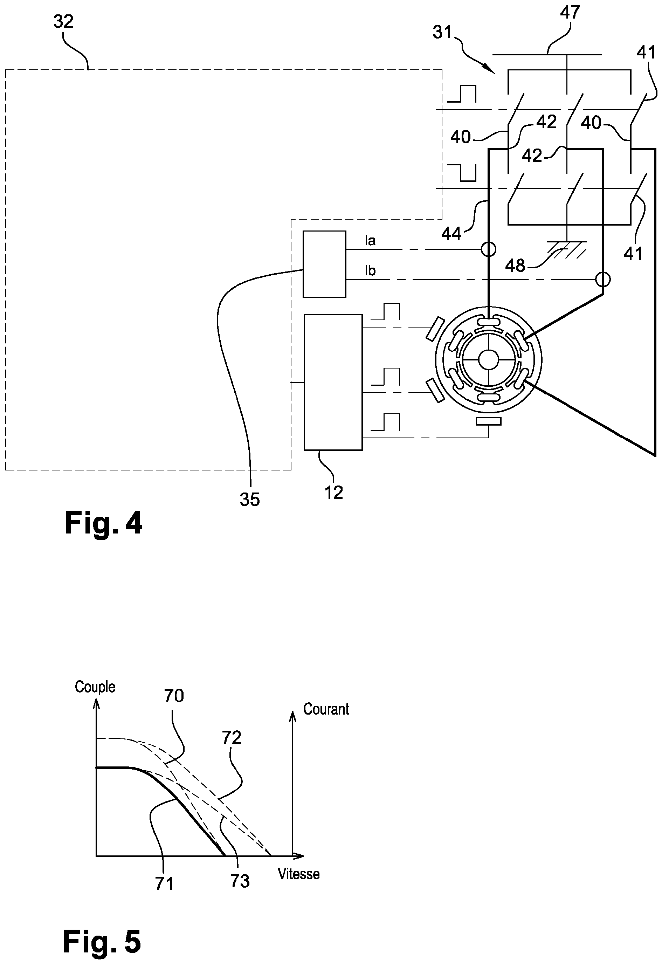

On va maintenant décrire en référence à la figure 4 de façon plus précise un exemple d'actionneur selon l'invention. Selon cet exemple, la machine électrique 6 est une machine synchrone à rotor à aimants permanents à pôles lisses. Le convertisseur statique 31 est ici un onduleur triphasé, chaque bras 40 de cet onduleur étant associé à la commande d'une phase du circuit électrique de l'induit, qui est ici le stator.

Le système de commande 32 est configuré pour appliquer au convertisseur statique 31 une commande vectorielle. Pour cela, les transformées de Clarke et de Park, connues de l'homme du métier, sont utilisées.

L'équation liant le couple électromagnétique exercé sur le rotor de la machine électrique et la norme du vecteur courant dans le repère de Park est :

$$T = \frac{3}{2} \times P \times \Phi \times sin\psi \times I'$$

P étant le nombre de paires de pôles du stator de la machine synchrone,

Φ étant le flux magnétique dans l'entrefer de la machine,

Ψ étant l'angle interne de la machine, c'est-à-dire l'angle défini entre le flux rotorique dans la machine et le flux généré par le champ tournant statorique, et

I' étant tel que $I' = \sqrt{I_d^2 + I_q^2}$ où $I_d$ et $I_q$ sont les composants sur l'axe direct et sur l'axe en quadrature dans le repère de Park du courant circulant dans le circuit électrique du stator.

On constate ainsi que la constante de couple K de la machine, qui est dans l'exemple décrit égale à $\frac{3}{2} \times P \times \Phi \times sin\psi$ varie lorsque l'angle interne Ψ de la machine varie.

Comme on peut le voir sur la figure 4, le système de commande 32 interagit ici avec le capteur de position 12, qui est dans l'exemple considéré un capteur à effet Hall, et avec le capteur de courant 35 qui permet de déterminer la valeur du courant dans deux des phases du circuit électrique du stator. Le système triphasé étant ici équilibré, on peut déduire la valeur du courant dans la dernière phase du circuit électrique du stator, de sorte que l'on connaît la valeur du courant dans chaque phase du stator.

Dans cet exemple, le système de commande 32 est configuré pour recevoir et traiter les données issues de ces capteurs 12 et 35.

Selon l'invention, le système de commande 32 est configuré pour appliquer un premier mode de commande aux cellules de commutation 41 du convertisseur statique 31, de manière à ce que l'angle interne Ψ de la machine prenne une première valeur correspondant à une première valeur pour la constante de couple K. Ce premier mode de commande correspond ici à un fonctionnement statique ou à un déplacement lent de l'actionneur et permet que ce dernier fournisse un couple élevé.

Le système de commande 32 est par ailleurs configuré pour appliquer un deuxième mode de commande aux cellules de commutation 41 du convertisseur statique 31, de manière à ce que l'angle interne Ψ de la machine prenne une pluralité de valeurs appartenant à une deuxième plage de valeurs. Ces valeurs de l'angle interne Ψ de la machine électrique 6 correspondent à des valeurs de la constante de couple K appartenant à une deuxième plage de valeurs. Ce deuxième mode de commande correspond ici à un fonctionnement dynamique de l'actionneur, ce dernier devant alors suivre rapidement une consigne en position.

La commande de la valeur de l'angle interne Ψ de la machine électrique 6 s'effectue, comme décrit ci-après, en générant les valeurs de consigne souhaitées pour les composantes sur l'axe direct Id et sur l'axe en quadrature Iq dans le repère de Park du courant circulant dans le circuit électrique du stator de la machine électrique 6.

Le premier mode de commande consiste par exemple à commander les cellules de commutation 41 de manière à ce que l'angle interne Ψ de la machine électrique 6 soit égal à 90° tandis que le deuxième mode de commande consiste alors à commander les cellules de commutation 41 de manière à ce que l'angle interne Ψ de la machine électrique 6 varie de façon continue entre 90° et 180° par exemple.

La figure 5 représente l'évolution du couple exercé sur la machine électrique 6 en fonction de sa vitesse de rotation, et l'évolution du courant circulant dans le circuit électrique du stator de cette machine électrique 6, toujours en fonction de sa vitesse de rotation.

Plus précisément, les courbes 70 et 71 représentent l'évolution du couple et du courant lorsque le premier mode de commande est appliqué avec un angle interne $\Psi$ de la machine électrique 6 égal à 90° tandis que les courbes 72 et 73 représentent l'évolution du couple et du courant lorsque l'on applique d'abord le premier mode de commande avec un angle interne $\Psi$ de la machine électrique 6 égal à 90° puis, à partir d'un certain seuil de vitesses, par exemple égal à la vitesse de bascule de la machine électrique 6, le deuxième mode de commande avec un angle interne $\Psi$ de la machine électrique 6 variant de façon continue entre 90° et 180°.

Comme on peut le voir en comparant les courbes 70 et 72 d'une part, et les courbes 71 et 73 d'autre part, l'application du deuxième mode de commande permet, par rapport au premier mode de commande, d'augmenter la vitesse de rotation de la machine électrique 6, pour une même valeur de courant circulant dans le circuit électrique du stator de la machine électrique 6 et pour une même valeur de couple exercé sur la machine électrique 6.

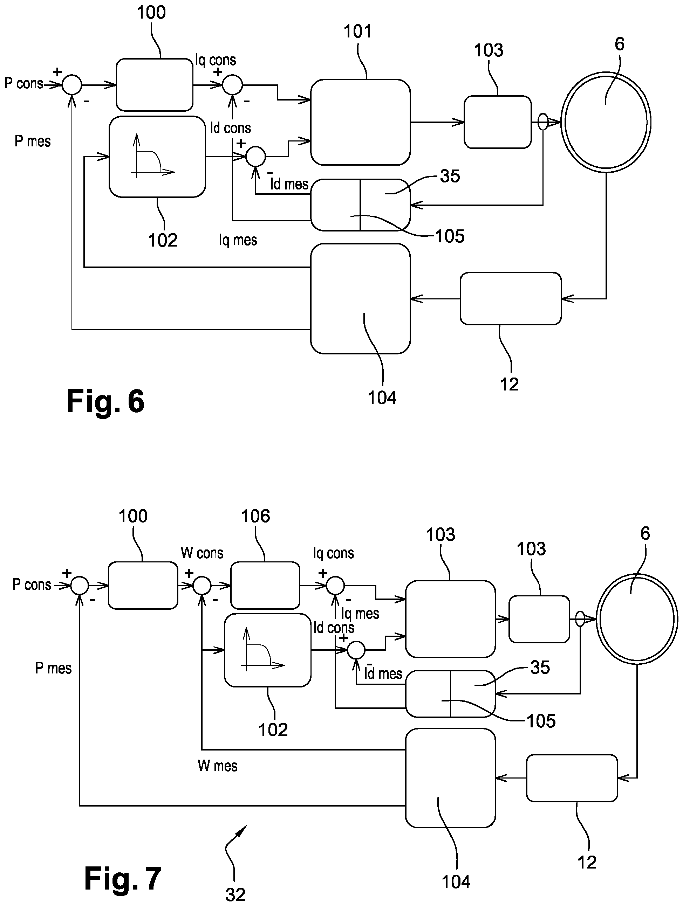

On va maintenant décrire en référence aux figures 6 et 7 deux exemples alternatifs de mise en oeuvre du système de commande 32.

Chacun des systèmes de commande 32 décrits en référence aux figures 6 et 7 met en oeuvre une régulation en cascade.

Le système de commande 32 de la figure 6 a comme entrée la valeur de consigne pour la position $P_{con}$ de l'actionneur, et cette entrée est comparée à la position mesurée $P_{mes}$ de l'actionneur. Le résultat de cette comparaison est reçu en entrée d'un bloc de contrôle de position 100 dont la sortie fournit la valeur de consigne $Iq_{cons}$ de la composante sur l'axe en quadrature dans le repère de Park du courant circulant dans le circuit électrique du stator de la machine électrique 6.

Cette valeur de consigne $Iq_{cons}$ est comparée avec la valeur $Iq_{mes}$ mesurée pour cette composante sur l'axe en quadrature. Le résultat de cette comparaison est reçu en entrée d'un bloc de contrôle de courant 101 recevant également comme autre entrée le résultat de la comparaison entre la valeur de consigne $Id_{cons}$ pour la composante sur l'axe direct dans le repère de Park du courant circulant dans le stator de la machine électrique et la valeur mesurée $Id_{mes}$ pour cette composante. La sortie de ce bloc de contrôle de courant 101 correspond à la consigne à appliquer au module de pilotage 103, encore appelé « driver », des cellules de commutation 41 du convertisseur statique 31.

La valeur de consigne $Id_{cons}$ pour la composante sur l'axe direct est obtenue en sortie d'un bloc 102. Ce bloc 102 génère la valeur de consigne $Id_{cons}$ à partir entre autres de la valeur mesurée pour la vitesse de rotation de la machine électrique 6. Ce bloc 102 peut générer cette valeur de consigne $Id_{cons}$ par une méthode exacte ou par une méthode forfaitaire. Lorsque la méthode exacte est utilisée, le bloc 102 met en oeuvre une fonction mathématique exprimant la consigne $Id_{cons}$ en fonction: du nombre de paires de pôles de la machine électrique 6, du flux rotorique, de la résistance électrique de chaque phase du stator de la machine électrique 6, de l'inductance de chaque phase de la machine électrique 6, de la consigne $Iq_{cons}$, de l'amplitude du courant d'alimentation du stator de la machine électrique 6, , de l'amplitude de la tension d'alimentation de la machine électrique 6, et comme déjà mentionné, de la valeur mesurée pour la vitesse de rotation de la machine électrique 6.

Lorsque la méthode forfaitaire est utilisée, $Id_{cons}$ est déterminée de manière à ce que la norme du vecteur courant I' reste inférieure à une valeur maximale.

Comme on peut le voir sur la figure 6, le système de commande 32 comprend encore dans l'exemple décrit un observateur 104 permettant, à partir de la valeur mesurée par le capteur 32, de fournir les valeurs mesurées pour la position de l'actionneur et pour la vitesse de rotation de la machine électrique 6.

Le système de commande 32 comprend encore un bloc 105 appliquant aux valeurs de courant dans chaque phase du circuit électrique du stator de la machine électrique 6 les transformées mathématiques permettant d'obtenir les valeurs mesurées pour les composantes sur l'axe direct et sur l'axe en quadrature $Id_{mes}$ et $Iq_{mes}$.

Le système de commande 32 de la figure 6 peut ainsi être qualifié de système mettant en oeuvre une régulation en cascade position/courant.

On va maintenant décrire en référence à la figure 7 un autre exemple de système de commande 32. Celui-ci diffère de celui qui vient d'être décrit en référence à la figure 6 par le fait que le bloc de contrôle de position 100 ne génère plus en sortie la consigne $Iq_{cons}$ mais une consigne $\omega_{cons}$ pour la vitesse de rotation de la machine électrique 6. Cette consigne $\omega_{cons}$ est comparée à la valeur mesurée $\omega_{mes}$ pour cette vitesse de rotation, qui est fournie par l'observateur 104.

Un bloc de contrôle de vitesse 106 reçoit en entrée l'écart entre $\omega_{cons}$ et $\omega_{mes}$ et génère en sortie la consigne $Iq_{cons}$.

Le système de commande 32 de la figure 7 peut ainsi être qualifié de système mettant en oeuvre une régulation en cascade position/vitesse/courant.

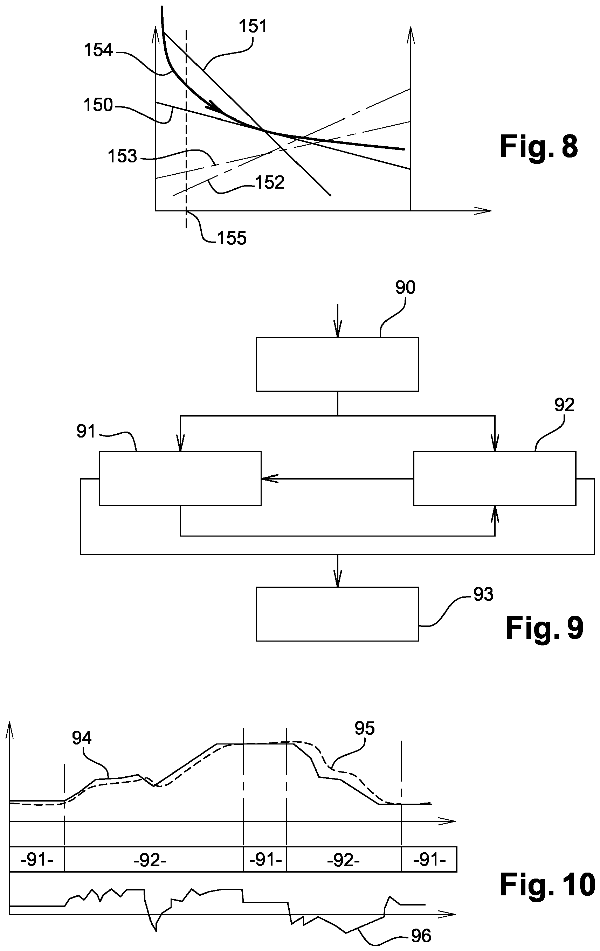

La figure 8 représente :

- le nombre de révolutions de la machine électrique 6 parcourues lors de l'application d'une consigne de courant de type échelon pendant une durée déterminée, cette durée déterminée correspondant à la durée d'actionnement souhaitée pour un déplacement de la sortie de l'actionneur 2 donné et à un couple moyen exercé par la charge du système de transmission 3 sur la machine 6 selon les courbes 150 et 151,

- le courant parcourant le circuit électrique du stator en fonction de ce couple moyen selon les courbes 152 et 153, et
- la charge de l'actionneur 2 en fonction de ce couple selon la courbe 154 qui représente une énergie de déplacement moyenne constante telle que le produit de la course de déplacement portée en ordonnée par le couple exercé sur la machine électrique 6 soit constant.

Les courbes 150 et 152, respectivement 151 et 153, correspondent au cas où la constante de couple K a une valeur élevée, respectivement faible. Le rapport de réduction fixe est représenté par la droite 155.

Le point d'intersection entre les courbes 155 et 154 correspond au déplacement minimum à réaliser avec le réducteur 7 dont la valeur de rapport de réduction a été déterminée comme mentionné préalablement.

Le point d'intersection entre la courbe 152 et la droite 155 définit le courant alimentant le circuit électrique de l'induit lorsque la constante de couple K a la valeur élevée, tandis que l'intersection entre la courbe 151 et la droite 155 permet de définir le nombre de révolutions de la machine électrique 6 lorsque la constante de couple K a une valeur faible, ce nombre de révolutions étant effectué pendant une durée correspondant au temps de déplacement souhaité sur la course de sortie de l'actionneur 2.

Comment on peut le voir, le doublet formé par les courbes 150 et 152 ne permet pas à l'actionneur 2 de suivre la consigne imposée mais permet de ne consommer qu'un courant réduit. Le premier mode de commande par le système 32 permettant d'obtenir cette valeur pour la constante de couple est ainsi particulièrement adapté à un mode de fonctionnement de l'actionneur 2 correspondant à un maintien du système de transmission 3 dans un état donné ou à un déplacement lent de l'actionneur 2.

Comment on peut par ailleurs le voir, le doublet formé par les courbes 151 et 153 permet à l'actionneur 2 de suivre la consigne imposée mais nécessite une consommation importante de courant par la machine électrique 6. Le deuxième mode de commande par le système de commande 32 permettant d'obtenir cette valeur pour la constante de couple est ainsi particulièrement adapté à un mode de fonctionnement transitoire de l'actionneur 2 correspondant à un déplacement rapide de l'actionneur 2.

L'actionneur 2 présente ainsi deux modes de fonctionnement distincts malgré le fait que le réducteur 7 ait un rapport de valeur fixe.

Le système de commande 32 des exemples de mise en oeuvre de l'invention décrits ci-dessus peut être configuré de manière à appliquer une commande auxiliaire lorsqu'une défaillance survient. Cette défaillance peut être interne à l'actionneur 2, ou affecter le système de transmission 3, ou plus globalement affecter un élément de la chaîne de propulsion du véhicule ou plus globalement affecter un élément du véhicule.

Lorsque le système de transmission 3 est un embrayage simple, cette commande auxiliaire consiste par exemple à agir sur les cellules de commutation du convertisseur statique 31 de manière à ce que la cellule de commutation 41 de chaque bras 40 reliant le point milieu 42 et l'entrée continue positive 47 du convertisseur 31 soit non passante, et à ce que la cellule de commutation 41 dudit bras 40 reliant le point milieu 42 et l'entrée continue négative 48 soit passante. La machine électrique est alors déconnectée de la source d'énergie électrique.

Lorsque le système de transmission 3 est un double embrayage, la commande auxiliaire consiste par exemple à rendre non passant l'ensemble des cellules de commutation 41 du convertisseur statique 31.

On a représenté sur la figure 9 un exemple de procédé de commande de l'actionneur 2 décrit précédemment. Le procédé peut comprendre une étape 90 d'initialisation de l'actionneur 2. Cette étape peut permettre de déterminer l'angle électrique initial du rotor de la machine électrique 6. Lorsque la machine électrique 6 est une machine synchrone, cette étape peut consister à appliquer une tension arbitraire au stator de la machine 6 pour orienter le rotor dans une direction préférentielle et mettre l'observateur 104 à zéro.

A la réception d'une consigne via le bus CAN, l'actionneur 2 est :

- soit commandé selon une étape 91 afin que la constante de couple K prenne une valeur élevée, de manière à ce que l'actionneur soit dans un mode de fonctionnement de maintien en état du système de transmission 3 ou soumis à un déplacement lent, le système de commande 32 appliquant alors le premier mode de commande,
- soit commandé selon une étape 92 afin que la constante de couple K varie de façon continue entre plusieurs valeurs faibles, de manière à ce que l'actionneur soit dans un mode de fonctionnement dans lequel il est soumis à un déplacement rapide, le système de commande 32 appliquant alors le deuxième mode de commande.

Lors d'une étape ultérieure 93, l'actionneur peut être désactivé, l'alimentation électrique étant alors interrompue.

La figure 10 représente d'une part sur une courbe 94 la valeur de consigne pour la position de l'actionneur 92 telle que déterminée par exemple par l'unité de contrôle moteur du véhicule, et sur une courbe 95 la position effective de cet actionneur 2.

En regard de ces positions sont représentés le mode de fonctionnement de l'actionnement qui correspond dans l'exemple considéré à une alternance des étapes 91 et 92 décrites en référence à la figure 9, et sur une courbe 96 le courant électrique alimentant le circuit électrique de l'induit de l'actionneur 2.

Comme on peut le voir, le fait que la constante de couple K ait une valeur élevée lors des étapes 91 permet une consommation de courant réduite, tandis que le fait que cette constante de couple K prenne plusieurs valeurs faibles lors des étapes 92 permet un déplacement rapide de l'actionneur 2 pour répondre aux consignes de manière satisfaisante.

L'invention n'est pas limitée aux exemples qui viennent d'être décrits.

En particulier, bien que les exemples décrits n'aient fait mention que de machines électriques tournantes, l'invention s'applique aussi à un actionneur comprenant une machine électrique linéaire.

L'invention peut par ailleurs s'appliquer avec une machine synchrone à pôles saillants ou avec une machine synchro-reluctante.

L'actionneur et le système de transmission selon l'invention peuvent former un ensemble destiné à être interposé entre un moteur thermique de propulsion de véhicule et la boîte de vitesses du véhicule.

En variante, cet ensemble est destiné à être interposé entre un moteur thermique de propulsion de véhicule et une boîte de vitesses associée à une machine électrique tournante.

En variante encore, deux ensembles comprenant chacun l'actionneur selon l'invention et le système de transmission peuvent être utilisés, l'un des ensembles étant par exemple disposé côté moteur thermique et l'autre ensemble étant disposé côté boîte de vitesses. Les deux ensembles peuvent être associés à un moteur électrique de propulsion, par exemple une machine électrique tournante. Le système de transmission côté moteur thermique permet alors d'accoupler ou de désaccoupler en rotation le vilebrequin du moteur thermique au rotor de la machine électrique tournante. Le système de transmission côté boîte de vitesses permet alors d'accoupler ou de désaccoupler le rotor de la machine électrique tournante à un arbre d'entrée de la boîte de vitesses.

On peut par exemple mettre en évidence l'effet apporté par l'invention en comparant sur un banc les grandeurs suivantes dans deux modes de fonctionnement distincts de l'actionneur, l'un de ces modes correspondant à un anti-calage ou débrayage d'urgence :

- position de la sortie de l'actionneur,
- courant électrique alimentant le moteur électrique,
- couple exercé par la charge du système de transmission sur la machine électrique de l'actionneur 3.

## Revendications

1. Actionneur (2) pour système de transmission (3) de véhicule, comprenant :

   - une machine électrique (6) comprenant un induit et un inducteur, la machine (6) étant telle que la relation entre une grandeur représentative du couple électromagnétique (T) exercé sur la machine (6) et une grandeur représentative du courant (I) circulant dans le circuit électrique de l'induit fasse intervenir une constante (K), (K) étant la constante de couple de la machine électrique (6),
   - un convertisseur statique (31) comprenant une pluralité de cellules de commutation (41), le convertisseur statique (31) étant disposé de manière à relier électriquement le circuit électrique de l'induit à une source d'énergie électrique, et
   - un système de commande (32) des cellules de commutation (41) du convertisseur statique (31), ledit système étant configuré pour appliquer un premier mode de commande aux cellules de commutation (41) de manière à ce que la constante de couple (K) de la machine électrique (6) prenne une première valeur, et pour appliquer un deuxième mode de commande aux cellules de commutation (41) de manière à ce que la constante de couple (K) de la machine électrique varie de façon continue au sein d'une deuxième plage de valeurs.

2. Actionneur selon la revendication 1, le système de commande (32) appliquant le premier mode de commande lorsque l'actionneur est dans un mode de fonctionnement statique et le système de commande (32) appliquant le deuxième mode de commande lorsque l'actionnement est dans un mode de fonctionnement dynamique.

3. Actionneur selon l'une des revendications 1 et 2, comprenant un réducteur (7) présentant un rapport de réduction fixe.

4. Actionneur selon l'une quelconque des revendications 1 à 3, le convertisseur statique (31) comprenant trois bras (40) montés en parallèle, chaque bras (40) comprenant deux cellules de commutation (41) en série séparées entre elles par un point milieu (42), chaque point milieu (42) permettant la connexion électrique du convertisseur (31) au circuit électrique de l'induit.

**5.** Actionneur selon la revendication 4, la machine électrique (6) étant une machine synchrone et le convertisseur statique (31) formant un onduleur triphasé.

**6.** Actionneur selon la revendication 5, le système de commande (32) des cellules de commutation (41) étant configuré pour mettre en oeuvre une commande vectorielle pour commander les cellules de commutation (41) de l'onduleur triphasé (31), ladite commande permettant que l'angle interne ($\psi$) de la machine prenne une première valeur lorsque le premier mode de commande est appliqué auxdites cellules (41) et ladite commande permettant que l'angle interne ($\psi$) de la machine varie de façon continue dans une deuxième plage de valeurs lorsque le deuxième mode de commande est appliqué auxdites cellules (41).

**7.** Actionneur selon la revendication 6, l'angle interne ($\psi$) de la machine étant sensiblement égal à 90° lorsque le premier mode de commande est appliqué et l'angle interne ($\psi$) de la machine variant de façon continue entre 90° et 180° lorsque le deuxième mode de commande est appliqué.

**8.** Actionneur selon l'une quelconque des revendications précédentes, le système de commande (32) des cellules de commutation (41) étant configuré pour faire varier la constante de couple (K) dans la deuxième plage de valeurs en fonction de l'un au moins des paramètres suivants:

- vitesse de la machine électrique,
- amplitude du courant d'alimentation du stator de la machine électrique
- amplitude de la tension d'alimentation de la machine électrique
- résistance électrique de chaque phase du stator de la machine électrique,
- inductance de chaque phase de la machine électrique,
- force contre-électromotrice de la machine électrique, et/ou
- résistance(s) électrique(s) en amont et/ou en aval du convertisseur statique

**9.** Actionneur selon l'une quelconque des revendications précédentes, le système de commande (32) des cellules de commutation (41) mettant en oeuvre une régulation en cascade selon laquelle, pour réguler la position de l'actionneur à une valeur de consigne, on régule tout ou partie des composantes dans un repère issu d'une ou plusieurs transformées mathématiques du courant circulant dans l'induit de la machine électrique (6), à leurs valeurs de consigne respectives.

**10.** Actionneur selon l'une quelconque des revendications 1 à 8, le système de commande (32) des cellules de commutation (41) mettant en oeuvre une régulation en cascade selon laquelle, pour réguler la position de l'actionneur à une valeur de consigne, on régule successivement la vitesse de la machine électrique (6) à une valeur de consigne, puis on régule on régule tout ou partie des composantes dans un repère issu d'une ou plusieurs transformées mathématiques du courant circulant dans l'induit de la machine électrique (6), à leurs valeurs de consigne respectives.

**11.** Ensemble, comprenant :

- un actionneur (2) selon l'une quelconque des revendications précédentes, et
- un système de transmission (3) de véhicule, ledit système (3) comprenant un organe apte à être déplacé par l'actionneur (2).

**12.** Procédé de commande d'un actionneur (2) selon l'une quelconque des revendications précédentes, dans lequel la commande des cellules de commutation (41) du convertisseur statique (31) permet que la valeur de la constante de couple (K) de la machine électrique (6) prenne au moins une valeur élevée et plusieurs valeurs faibles, le procédé comprenant l'étape consistant à faire varier de façon continue la constante de couple (K) de la machine électrique (6) parmi les valeurs faibles, cette variation s'effectuant notamment depuis la valeur élevée.

**13.** Procédé selon la revendication 12, comprenant l'étape (91) selon laquelle on commande les cellules de commutation (41) de manière à ce que la constante de couple (K) prenne la valeur élevée lorsque l'actionneur (2) maintient le système de transmission (3) dans un état donné. et/ou comprenant l'étape (92) selon laquelle on commande les cellules de commutation (41) de manière à ce que la constante de couple (K) prenne les valeurs faibles pour déplacer l'actionneur (2).

**Patentansprüche**

1. Stellantrieb (2) für ein Fahrzeuggetriebesystem (3), umfassend:

    - eine elektrische Maschine (6), die einen Rotor und einen Stator umfasst, wobei die Maschine (6) derart ist, dass das Verhältnis zwischen einer Größe, die für das auf die Maschine (6) ausgeübte elektromagnetische Moment (T) repräsentativ ist, und einer Größe, die für den im Stromkreis des Rotors fließenden Strom (I) repräsentativ ist, eine Konstante (K) beinhaltet, wobei (K) die Momentenkonstante der elektrischen Maschine (6) ist,
    - einen statischen Umrichter (31), der eine Vielzahl von Schaltzellen (41) umfasst, wobei der statische Umrichter (31) so angeordnet ist, dass er den Stromkreis des Rotors mit einer elektrischen Energiequelle verbindet, und
    - ein Steuerungssystem (32) zur Steuerung der Schaltzellen (41) des statischen Umrichters (31), wobei das System dazu ausgestaltet ist, einen ersten Steuerungsmodus so auf die Schaltzellen (41) anzuwenden, dass die Momentenkonstante (K) der elektrischen Maschine (6) einen ersten Wert annimmt, und einen zweiten Steuerungsmodus so auf die Schaltzellen (41) anzuwenden, dass die Momentenkonstante (K) der elektrischen Maschine kontinuierlich innerhalb eines zweiten Wertebereichs variiert.

2. Stellantrieb nach Anspruch 1, wobei das Steuerungssystem (32) den ersten Steuerungsmodus anwendet, wenn der Stellantrieb in einem statischen Betriebsmodus ist, und das Steuerungssystem (32) den zweiten Steuerungsmodus anwendet, wenn der Antrieb in einem dynamischen Betriebsmodus ist.

3. Stellantrieb nach einem der Ansprüche 1 und 2, umfassend ein Untersetzungsgetriebe (7), das ein festes Untersetzungsverhältnis aufweist.

4. Stellantrieb nach einem der Ansprüche 1 bis 3, wobei der statische Umrichter (31) drei parallel montierte Arme (40) umfasst, wobei jeder Arm (40) zwei Schaltzellen (41) in Reihe umfasst, die untereinander durch einen Mittelpunkt (42) getrennt sind, wobei jeder Mittelpunkt (42) den elektrischen Anschluss des Umrichters (31) an den Stromkreis des Rotors ermöglicht.

5. Stellantrieb nach Anspruch 4, wobei die elektrische Maschine (6) eine Synchronmaschine ist und der statische Umrichter (31) einen dreiphasigen Wechselrichter bildet.

6. Stellantrieb nach Anspruch 5, wobei das Steuerungssystem (32) der Schaltzellen (41) dazu ausgestaltet ist, eine Vektorsteuerung zum Steuern der Schaltzellen (41) des dreiphasigen Wechselrichters (31) einzusetzen, wobei die Steuerung es ermöglicht, dass der Innenwinkel ($\Psi$) der Maschine einen ersten Wert annimmt, wenn der erste Steuerungsmodus auf die Zellen (41) angewandt wird, und die Steuerung es ermöglicht, dass der Innenwinkel ($\Psi$) der Maschine kontinuierlich in einem zweiten Wertebereich variiert, wenn der zweite Steuerungsmodus auf die Zellen (41) angewandt wird.

7. Stellantrieb nach Anspruch 6, wobei der Innenwinkel ($\Psi$) der Maschine im Wesentlichen gleich 90° ist, wenn der erste Steuerungsmodus angewandt wird, und der Innenwinkel ($\Psi$) der Maschine kontinuierlich zwischen 90° und 180° variiert, wenn der zweite Steuerungsmodus angewandt wird.

8. Stellantrieb nach einem der vorhergehenden Ansprüche, wobei das Steuerungssystem zur Steuerung der (32) der Schaltzellen (41) dazu ausgestaltet ist, die Momentenkonstante (K) in dem zweiten Wertebereich in Abhängigkeit von mindestens einem der folgenden Parameter variieren zu lassen:

    - Drehzahl der elektrischen Maschine,
    - Amplitude des Versorgungsstroms des Stators der elektrischen Maschine,
    - Amplitude der Versorgungsspannung der elektrischen Maschine,
    - elektrischer Widerstand jeder Phase des Stators der elektrischen Maschine,
    - Induktivität jeder Phase der elektrischen Maschine,
    - gegenelektromotorische Kraft der elektrischen Maschine, und/oder
    - elektrischer Widerstand oder elektrische Widerstände vor und/oder hinter dem statischen Umrichter.

9. Stellantrieb nach einem der vorhergehenden Ansprüche, wobei das Steuerungssystem (32) zur Steuerung der Schaltzellen (41) eine kaskadierte Regelung einsetzt, gemäß der zum Regeln der Position des Stellantriebs auf einen Sollwert alle oder ein Teil der Komponenten in einem Koordinatensystem, das aus einer oder mehreren mathematischen Transformationen des im Rotor der elektrischen Maschine (6) fließenden Stroms hervorgeht, auf ihre jeweiligen Sollwerte geregelt werden.

10. Stellantrieb nach einem der Ansprüche 1 bis 8, wobei das Steuerungssystem (32) zur Steuerung der Schaltzellen (41) eine kaskadierte Regelung einsetzt, gemäß der zum Regeln der Position des Stellantriebs auf einen Sollwert nacheinander die Drehzahl der elektrischen Maschine (6) auf einen Sollwert geregelt wird, dann alle oder ein Teil der Komponenten in einem Koordinatensystem, das aus einer oder mehreren mathematischen Transformationen des im Rotor der elektrischen Maschine (6) fließenden Stroms hervorgeht, auf ihre jeweiligen Sollwerte geregelt werden geregelt werden.

11. Anordnung, umfassend:

   - einen Stellantrieb (2) nach einem der vorhergehenden Ansprüche,
   - ein Fahrzeuggetriebesystem (3), wobei das System (3) ein Element umfasst, das geeignet ist, vom Stellantrieb (2) bewegt zu werden.

12. Verfahren zur Steuerung eines Stellantriebs (2) nach einem der vorhergehenden Ansprüche, wobei die Steuerung der Schaltzellen (41) des statischen Umrichters (31) es ermöglicht, dass der Wert der Momentenkonstante (K) der elektrischen Maschine (6) mindestens einen hohen Wert und mehrere geringe Werte annimmt, wobei das Verfahren den Schritt umfasst, der darin besteht, die Momentenkonstante (K) der elektrischen Maschine (6) kontinuierlich unter den geringen Werten variieren zu lassen, wobei dieses Variieren insbesondere vom hohen Wert aus erfolgt.

13. Verfahren nach Anspruch 12, umfassend den Schritt (91), gemäß dem die Schaltzellen (41) so gesteuert werden, dass die Momentenkonstante (K) den hohen Wert annimmt, wenn der Stellantrieb (2) das Getriebesystem (3) in einem gegebenen Zustand hält,
und/oder
umfassend den Schritt (92), gemäß dem die Schaltzellen (41) so gesteuert werden, dass die Momentenkonstante (K) die geringen Werte annimmt, um den Stellantrieb (2) zu bewegen.

**Claims**

1. Actuator (2) for a vehicle transmission system (3) comprising:

   - an electric machine (6) comprising a rotor and a stator, the machine (6) being designed such that the ratio between a representative magnitude of the electromagnetic torque (T) exerted on the machine (6) and a representative magnitude of the current (I) flowing through the electrical circuit of the rotor involves a constant (K), (K) being the torque constant of the electric machine (6),
   - a static converter (31) comprising a plurality of switching cells (41), the static converter (31) being arranged such as to electrically connect the electrical circuit of the rotor to a source of electrical energy, and
   - a control system (32) for the switching cells (41) of the static converter (31), said system being designed to apply a first control mode to the switching cells (41) such that the torque constant (K) of the electric machine (6) adopts a first value, and to apply a second control mode to the switching cells (41) such that the torque constant (K) of the electric machine varies continuously within a second range of values.

2. Actuator according to Claim 1, the control system (32) applying the first control mode when the actuator is in a static operating mode and the control system (32) applying the second control mode when the actuator is in a dynamic operating mode.

3. Actuator according to one of Claims 1 and 2, including a gearbox (7) having a fixed gear ratio.

4. Actuator according to any one of Claims 1 to 3, the static converter (31) having three arms (40) mounted in parallel, each arm (40) having two switching cells (41) arranged in series and separated from one another by a mid-point (42), each mid-point (42) enabling the electrical connection of the converter (31) to the electrical circuit of the rotor.

5. Actuator according to Claim 4, the electric machine (6) being a synchronous machine and the static converter (31) forming a three-phase inverter.

**6.** Actuator according to Claim 5, the control system (32) of the switching cells (41) being designed to apply vector control to control the switching cells (41) of the three-phase inverter (31), said control enabling the internal angle ($\psi$) of the machine to adopt a first value when the first control mode is applied to said cells (41) and said control enabling the internal angle ($\psi$) of the machine to vary continuously within a second range of values when the second control mode is applied to said cells (41).

**7.** Actuator according to Claim 6, the internal angle ($\psi$) of the machine being substantially equal to 90° when the first control mode is applied and the internal angle ($\psi$) of the machine varying continuously between 90° and 180° when the second control mode is applied.

**8.** Actuator according to any one of the preceding claims, the control system (32) of the switching cells (41) being designed to vary the torque constant (K) within the second range of values as a function of at least one of the following parameters:

  - speed of the electric machine,
  - amplitude of the supply current of the stator of the electric machine,
  - amplitude of the supply voltage of the electric machine,
  - electrical resistance of each phase of the stator of the electric machine,
  - inductance of each phase of the electric machine,
  - counter-electromotive force of the electric machine, and/or
  - electrical resistance upstream and/or downstream of the static converter.

**9.** Actuator according to any one of the preceding claims, the control system (32) of the switching cells (41) implementing cascade control in which, to set the position of the actuator to a set point, some or all of the components in a reference frame from one or more mathematic transformations of the current flowing through the rotor of the electric machine (6) are set to the respective set points thereof.

**10.** Actuator according to any one of claims 1 to 8, the control system (32) of the switching cells (41) implementing cascade control in which, to set the position of the actuator to a set point, the speed of the electric machine (6) is set to a set point, then some or all of the components in a reference frame from one or more mathematic transformations of the current flowing through the rotor of the electric machine (6) are set are set to the respective set points thereof.

**11.** Assembly comprising:

  - an actuator (2) according to any one of the preceding claims, and
  - a vehicle transmission system (3), said system (3) having a member able to move the actuator (2).

**12.** Control method for an actuator (2) according to any one of the preceding claims, in which control of the switching cells (41) of the static converter (31) enables the value of the torque constant (K) of the electric machine (6) to adopt at least one high value and several low values,
the method including the step of continuously varying the torque constant (K) of the electric machine (6) between the low values, this variation being effected notably from the high value.

**13.** Method according to Claim 12, including the step (91) in which the switching cells (41) are controlled such that the torque constant (K) adopts the high value while the actuator (2) keeps the transmission system (3) in a given state, and/or
including the step (92) in which the switching cells (41) are controlled such that the torque constant (K) adopts the low values to move the actuator (2).

**Fig. 1**

**Fig. 3**

**Fig. 2**

**Fig. 4**

**Fig. 5**

**Fig. 6**

**Fig. 7**

**Fig. 8**

**Fig. 9**

**Fig. 10**

**RÉFÉRENCES CITÉES DANS LA DESCRIPTION**

**Documents brevets cités dans la description**

- FR 2947768

- FR 2951033